(19) **Europäisches Patentamt / European Patent Office / Office européen des brevets**

(11) **EP 4 563 711 A1**

(12) **EUROPEAN PATENT APPLICATION**
published in accordance with Art. 153(4) EPC

(43) Date of publication:
04.06.2025 Bulletin 2025/23

(21) Application number: 23854752.5

(22) Date of filing: 12.07.2023

(51) International Patent Classification (IPC):
**C21C 7/00** (2006.01)

(52) Cooperative Patent Classification (CPC):
**C21C 7/00**

(86) International application number:
**PCT/JP2023/025699**

(87) International publication number:
**WO 2024/038715 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 18.08.2022 JP 2022130502

(71) Applicant: JFE Steel Corporation
Tokyo 100-0011 (JP)

(72) Inventors:
• **NEGISHI, Hidemitsu**
  **Tokyo 100-0011 (JP)**
• **KOYAMA, Takumi**
  **Tokyo 100-0011 (JP)**
• **MIZOBATA, Keisuke**
  **Tokyo 100-0011 (JP)**

(74) Representative: **Hoffmann Eitle
Patent- und Rechtsanwälte PartmbB
Arabellastraße 30
81925 München (DE)**

(54) **METHOD FOR DENITRIFYING MELTED STEEL**

(57) Proposed is a technology capable of inexpensively and stably reducing the nitrogen concentration in molten steel within a melting furnace or a refining furnace to a low nitrogen concentration range. Provided is a method for denitrifying molten steel including supplying an oxygen-containing gas and a carbon source carried with a carrier gas to the molten steel charged into a melting furnace or a refining furnace, in which the oxygen-containing gas and the carbon source are simultaneously blown onto the molten steel under a condition that, provided that a triangle $\Delta XYZ$ is defined by connecting, in a plan view seen from above, a distal end (point X) of a discharge port of a carbon-source blowpipe; an intersection point (point Y) between an inner wall of the furnace and a line obtained by extending a central axis of a carbon source blowing direction; and a distal end (point Z) of a discharge port of an oxygen-blowing lance, that a point W is positioned on a side XY that is away from the point X by a distance 2/3 a length of the side XY, and that an angle $\theta_1(°)$ is an angle $\angle XZW$, an angle $\theta_2(°)$ of an oxygen-containing-gas blowing direction that is open toward a Y side with respect to a side ZX passing through the distal end (point Z) of the discharge port of the oxygen-blowing lance in the plan view seen from above is a positive value and is the angle $\theta_1$ or less.

[Fig. 2]

## Description

Technical Field

The present invention relates to a method for denitrifying molten steel by supplying an oxygen-containing gas and a carbon source thereto during a step of producing steel by processing an iron source raw material, such as scrap, reduced iron, and pig iron, in a melting furnace or a refining furnace.

Background Art

Nitrogen is a component detrimental to metallic materials. In the conventional steelmaking process, nitrogen [N] in molten iron is removed by being adsorbed onto the surfaces of bubbles of carbon monoxide (CO) that are mainly generated during the decarburization of molten pig iron. Since molten steel with a low carbon concentration generates a limited amount of carbon monoxide, it is impossible to reduce the nitrogen concentration in the molten steel to a low concentration using such a method. Herein, "molten iron" refers to molten metal mainly composed of iron, that is, molten metal in which the content of iron is over 50%. Examples of molten iron include molten pig iron, molten steel, a molten cold iron source, and molten metal having the mixture.

Meanwhile, a reduction in $CO_2$ emissions is demanded for global environmental protection. To this end, it is necessary to shift the steelmaking process from the conventional method that involves using a blast furnace and a converter to a method of melting scraps or reduced iron. In such a case, however, the obtained molten iron has a low carbon concentration, which may make it impossible to form low-nitrogen steel for the above reason.

In response, there have been proposed several methods for effectively denitrifying molten steel by reacting carbon [C] and an oxygen-containing gas in the molten steel within an electric furnace, and then utilizing bubbles of carbon monoxide generated by the reaction. For example, Patent Literature 1 discloses limiting conditions, such as the carbon blowing rate and the oxygen supply rate to molten steel, and also limiting the nitrogen concentration ($\leq$ 3 vol.%) in a carrier gas for blowing carbon into the molten steel. Patent Literature 1 also discloses that promoting denitrification and suppressing nitrogen adsorption at the same time can reduce the nitrogen concentration [N] in the molten steel to 25 mass ppm or less at the termination of refining.

In addition, Patent Literature 2 discloses that a hydrocarbon-containing gas is used as a carrier gas for blowing a carbon source into molten steel. Patent Literature 2 also discloses that it is possible to obtain the effects of promoting carburization and reducing the nitrogen concentration [N] in the molten steel to less than about 20 mass ppm compared to when air is used as the carrier gas.

Further, Patent Literature 3 discloses that carbon and oxygen are injected simultaneously but separately into the same zone within a furnace. Patent Literature 3 also discloses that the denitrification of molten steel improves by about 5 mass ppm compared to when oxygen is injected alone.

Citation List

Patent Literature

    Patent Literature 1: JP-H11-012634A
    Patent Literature 2: JP-H03-028312A
    Patent Literature 3: PCT International Application Publication No. 2002-533566

Summary of Invention

Technical Problem

However, the conventional technologies have the following problems. Typically, air or a nitrogen gas is used as a carrier gas for blowing a carbon source into molten steel in an electric furnace. In contrast, each of the methods described in Patent Literature 1 and Patent Literature 2 uses an argon gas or a hydrocarbon-containing gas as a carrier gas. This requires a huge investment in facilities and equipment, such as a pipe for introducing the gas, which is different from ordinary gas, and a gas storage tank.

In addition, in the method described in Patent Literature 3, carbon is injected around an oxygen injection zone. In the carbon injection zone, a carbon concentration can be achieved that is locally higher than the carbon concentration (i.e., the mean carbon concentration in the steel bath) in the non-carbon injection zone. This has significance as the generation of a carbon monoxide gas is promoted in such a zone. However, there is no disclosure about the definition of such a local zone, that is, the acceptable distance between the carbon injection portion and the oxygen injection portion, and just "about 20 cm distance" is indicated as an example. A blowpipe for a carbon source is often of a type embedded in the wall of a furnace. In such a case, in order to inject carbon around the oxygen injection zone, it is necessary to separately provide a carbon source lance and a lance position adjustment device, as well as modify other equipment, which is not realistic.

The present invention has been made in view of the above circumstances and aims to propose a technology capable of stably reducing the nitrogen concentration in molten steel in a melting furnace or a refining furnace to a low nitrogen concentration range without requiring a huge investment.

Solution to Problem

A method for denitrifying molten steel according to the present invention which advantageously solves the above problems is a method for denitrifying molten steel involving supplying an oxygen-containing gas, and a carbon source carried by a carrier gas to the molten steel charged into a melting furnace or a refining furnace, characterized in that the oxygen-containing gas and the carbon source are simultaneously blown onto the molten steel under a condition that, provided that a triangle $\triangle XYZ$ is defined by connecting, in a plan view seen from above, a distal end (point X) of a discharge port of a carbon-source blowpipe; an intersection point (point Y) between an inner wall of the furnace and a line obtained by extending a central axis of a carbon source blowing direction; and a distal end (point Z) of a discharge port of an oxygen-blowing lance, that a point W is positioned on a side XY that is away from the point X by a distance 2/3 a length of the side XY, and that an angle $\theta_1$(°) is an angle $\angle XZW$, an angle $\theta_2$(°) of an oxygen-containing-gas blowing direction that is open toward a Y side with respect to a side ZX passing through the distal end (point Z) of the discharge port of the oxygen-blowing lance in the plan view seen from above is a positive value and is the angle $\theta_1$ or less.

Note that the method for denitrifying molten steel according to the present invention may include the following features that are considered to be preferable solution means.

(a) When the carbon-source blowpipe includes a plurality of carbon-source blowpipes, the above condition is satisfied with respect to at least one of the carbon-source blowpipes.
(b) A time $t_1$ (min) for simultaneously supplying the carbon source and the oxygen-containing gas from the carbon-source blowpipe and the oxygen-blowing lance, respectively, is set to at least 30% or more of a time $t_2$ (min) taken from a start of melting a cold iron source to a start of tapping the molten steel from the furnace.
(c) The point W is positioned at a middle point of the side XY.
(d) The melting furnace is an electric furnace.

Advantageous Effects of Invention

According to the method for denitrifying molten steel of the present invention, it is possible to stably reduce the nitrogen concentration in molten steel in a melting furnace or a refining furnace to a low nitrogen concentration range without requiring a huge investment.

Brief Description of Drawings

[Fig. 1] Fig. 1 is a schematic view of an example of an apparatus for implementing the present invention in which Fig. 1(a) represents a longitudinal sectional view, and Fig. 1(b) represents a plan view seen from above.
[Fig. 2] Fig. 2 is a schematic view of an overview of an experiment for inspecting the influence of the directions in which an oxygen gas and carbon are simultaneously blown in on denitrification, in which Fig. 2(a) represents a case where an oxygen-containing gas is blown in from an oxygen-blowing lance on the slag removal side, and Fig. 2(b) represents a case where an oxygen-containing gas is blown in from an oxygen-blowing lance on the tapping side.
[Fig. 3] Fig. 3 is a schematic view showing the blowing direction for, when an oxygen-containing gas and a carbon source are simultaneously blown in, the oxygen-containing gas that is preferred for denitrification.
[Fig. 4] Fig. 4 is a graph showing the influence of the ratio R(%) of the time for simultaneously supplying an oxygen-containing gas and a carbon source on the nitrogen concentration in molten steel according to the present invention.

Description of Embodiment

An embodiment of the present invention will be specifically described below. Note that the drawings are only schematic, and thus may differ from the actual ones. In addition, the following embodiment only illustrates examples of an apparatus and a method for embodying the technical idea of the present invention. Thus, the configuration of the present invention is not limited thereto. That is, the technical idea of the present invention may be changed in various ways within the technical scope recited in the claims.

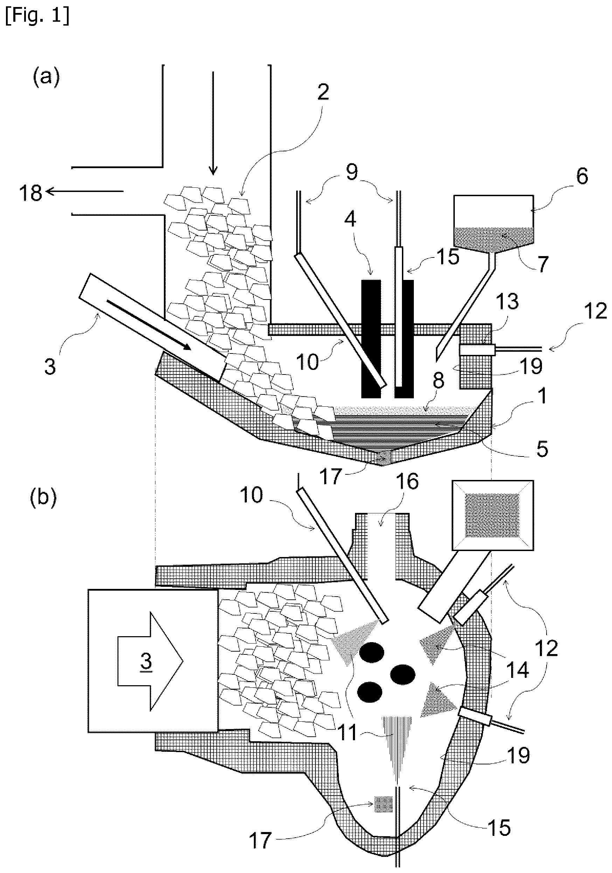

Fig. 1 shows an example of a preferred apparatus configuration for implementing the present invention. In the example of Fig. 1, an electric arc furnace is used for a refining vessel as a melting furnace. Scrap 2, which has been fed into a furnace body 1 of the electric arc furnace from a skip car or a crane bucket, for example, is pushed into the furnace body 1 with a pusher 3. An arc is then generated from graphite electrodes 4 to melt the scrap 2 as a cold iron source so that molten steel 5 is obtained. At the same time, a flux 7 is added into the molten steel 5 from a hopper facility 6 above the furnace so that slag 8 is obtained. To promote the melting of the scrap 2, an oxygen-containing gas 11 is blown from an oxygen pipe system 9 toward the molten steel 5 on the scrap-charging side through an oxygen-blowing lance 10 on the slag removal side. At the same time, a carbon source and carrier gas 14 are blown onto the molten steel 5 from a carrier gas pipe system 12 through a carbon-source blowpipe 13 for the purpose of increasing the carbon concentration within the molten steel 5 or shielding the molten steel 5 from the atmosphere due to the foaming of the slag 8. In the example of Fig. 1, the carbon-source blowpipe 13 is horizontally embedded in a furnace wall 19. As the melting of the scrap proceeds, the oxygen-containing gas 11 is blown onto the molten steel 5 also from an oxygen-blowing lance 15 on the tapping side. After a predetermined time has elapsed, the supply of the oxygen-containing gas 11, the carbon source, and the carrier gas 14 is stopped. At the same time, the arc conduction from the graphite electrodes 4 is stopped, and the slag 8 is partially discharged to the outside of the furnace from a slag removal port 16. The molten steel 5 is then tapped from the furnace through a tapping port 17.

Examples of melting furnaces or refining furnaces include not only electric arc furnaces but also induction melting furnaces and ladle refining furnaces. The cold iron source can be not only scrap but also reduced iron. Preferably, the cold iron source is an iron source produced with renewable energy. It should be noted that the reduced iron herein is directed to the commonly available one. The oxygen-containing gas 11 can be a pure oxygen gas or a gas formed by diluting an oxygen gas. The diluent gas preferably does not contain nitrogen to promote denitrification. Examples of the diluent gas include an argon gas and a carbon dioxide gas. For example, air can be used as the carrier gas for the carbon source.

With respect to the above process, the inventors have made a detailed study of the influence of a blowing direction and a blowing condition on denitrification when the oxygen-containing gas 11, the carbon source, and the carrier gas 14 are blown in simultaneously but separately using an electric arc furnace similar to that shown in Fig. 1.

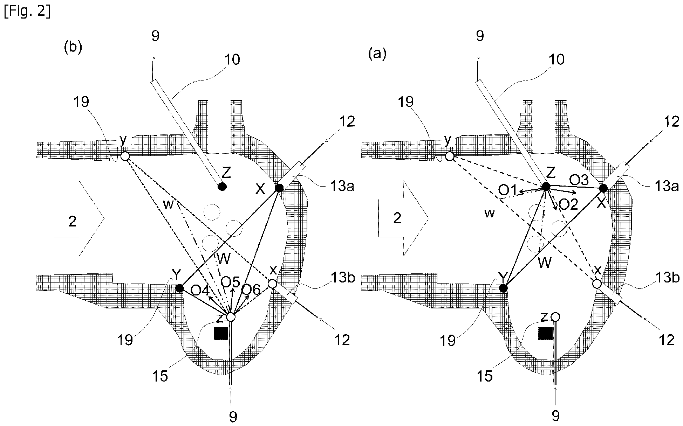

During the study, powdered carbon as the carbon source was blown onto the molten steel 5 together with air as the carrier gas with its blowing direction fixed, as shown in Fig. 2(a) and Fig. 2(b). At the same time, as shown in Fig. 2(a), an oxygen gas as the oxygen-containing gas was blown onto the molten steel in any of the directions O1 to O3 by changing the direction of a discharge port of the oxygen-blowing lance 10 on the slag removal side. In addition, as shown in Fig. 2(b), an oxygen gas was blown onto the molten steel in any one of the directions O4 to O6 by changing the direction of a discharge port of the oxygen-blowing lance 15 on the tapping side.

Assume that the respective distal ends of the discharge ports of the carbon-source blowpipe 13a on the slag removal side and the carbon-source blowpipe 13b on the tapping side are indicated by a point X and a point x. The respective points of intersection between the furnace wall 19 and the lines obtained by extending the central axes of the air as well as the powdered carbon 14, which are blown in from the respective carbon-source blowpipes, in a plan view seen from above, are indicated by a point Y and a point y. The respective distal ends of the oxygen gas discharge ports on the slag removal side and the tapping side are indicated by a point Z and a point z. In addition, a position on a side XY that is away from the point X by a distance 2/3 the length of the side XY is indicated by a point W, and a position on a side xy that is away from the point x by a distance 2/3 the length of the side xy is indicated by a point w. First, as shown in Fig. 2(a), when an oxygen-containing gas is blown in from the oxygen-blowing lance 10 on the slag removal side, triangles each having as the vertex the distal end (point Z) of the oxygen gas discharge port on the slag removal side are represented by $\triangle$XYZ, $\triangle$XWZ, $\triangle$xyZ, and $\triangle$xwZ. At this time, the oxygen blowing direction O1 corresponds to a method of blowing in an oxygen gas when a line obtained by extending the central axis of the oxygen gas jet in the plan view seen from above lies outside each of the triangles $\triangle$XWZ and $\triangle$xwZ. The oxygen blowing directions O2 and O3 each correspond to a method of blowing in an oxygen gas when a line obtained by extending the central axis of the oxygen gas jet in the plan view seen from above lies inside the triangle $\triangle$XWZ and, regarding the oxygen blowing direction O2, also inside the triangle $\triangle$xwZ.

In addition, as shown in Fig. 2(b), when an oxygen-containing gas is blown in from the oxygen-blowing lance 15 on the tapping side, triangles each having as the vertex the distal end (point z) of the oxygen gas discharge port on the tapping side are represented by $\triangle$xyz, $\triangle$xwz, $\triangle$XYz, and $\triangle$XWz. At this time, the oxygen blowing direction O4 corresponds to a method of blowing in an oxygen gas when a line obtained by extending the central axis of the oxygen gas jet in the plan view seen from above lies outside each of the triangles $\triangle$xwz and $\triangle$XWz. The oxygen blowing directions O5 and O6 each correspond to a method of blowing in an oxygen gas when a line obtained by extending the central axis of the oxygen gas jet in the plan view seen from above lies inside the triangle $\triangle$xwz and, for the oxygen blowing direction O5, also inside the triangle $\triangle$XWz.

The time at which scrap was charged into the furnace and the supply of a current from the graphite electrodes 4 was started was assumed as the start of melting (start of a process), and immediately powdered carbon was blown in with air as a carrier from the carbon-source blowpipe 13a on the slag removal side and the carbon-source blowpipe 13b on the tapping side. At the same time, as shown in Table 1, oxygen was blown in from the oxygen-blowing lance 10 on the slag removal side in one of the directions O1 to O3 for 15 to 45 minutes, and then, the blowing of oxygen was stopped. Immediately after that, oxygen was blown in from the oxygen-blowing lance 15 on the tapping side in one of the directions O4 to O6 for 15 to 45 minutes. After the supply of a current from the graphite electrodes 4 was stopped, a sample of the molten steel 5 in the furnace was collected, and the molten steel 5 was tapped from the furnace. The sample was analyzed for the carbon concentration and the nitrogen concentration.

Note that all of the scrap 2 charged into the furnace was punched scrap with a nitrogen concentration of about 22 mass ppm. As the carbon source charged into the furnace, powdered carbon blown in from the carbon-source blowpipes 13 and aggregated carbon added from the hopper facility 6 above the furnace were used. In addition, adjustment was performed to allow the molten steel to have a carbon concentration [C] of about 0.05 mass% upon termination of the process. Table 1 illustrates the results together with the conditions.

[Table 1]

| Level | Conditions on Slag Removal Side | | | Conditions on Tapping Side | | | Total Time $t_1$ of Simultaneous Blowing | Processing Time $t_2$ | Steel Composition Before Tapping | |
|---|---|---|---|---|---|---|---|---|---|---|
| | Oxygen Blowing | Carbon Blowing | Simultaneous Blowing | Oxygen Blowing | Carbon Blowing | Simultaneous Blowing | | | [C] | [N] |
| | | Time | Time | Time | | Time | Time | Time | | | | |
| | Direction | min | min | min | Direction | min | min | min | min | min | mass% | mass ppm |
| 1 | O1 | 45 | 60 | 45 | O4 | 15 | 60 | 15 | 60 | 60 | 0.05 | 136 |
| 2 | O1 | 45 | 60 | 45 | O5 | 15 | 60 | 15 | 60 | 60 | 0.06 | 68 |
| 3 | O1 | 45 | 60 | 45 | O6 | 15 | 60 | 15 | 60 | 60 | 0.04 | 69 |
| 4 | O1 | 40 | 60 | 40 | O5 | 20 | 60 | 20 | 60 | 60 | 0.05 | 35 |
| 5 | O1 | 35 | 60 | 25 | O5 | 25 | 60 | 25 | 60 | 60 | 0.04 | 27 |
| 6 | O1 | 15 | 60 | 15 | O5 | 45 | 60 | 45 | 60 | 60 | 0.05 | 12 |
| 7 | O2 | 20 | 60 | 20 | O4 | 20 | 60 | 20 | 40 | 70 | 0.05 | 36 |
| 8 | O2 | 20 | 60 | 20 | O5 | 20 | 60 | 20 | 40 | 70 | 0.05 | 18 |
| 9 | O2 | 20 | 60 | 20 | O6 | 20 | 60 | 20 | 40 | 70 | 0.06 | 17 |
| 10 | O3 | 30 | 60 | 30 | O4 | 15 | 60 | 15 | 45 | 60 | 0.04 | 21 |
| 11 | O3 | 30 | 60 | 30 | O5 | 15 | 60 | 15 | 45 | 60 | 0.05 | 12 |
| 12 | O3 | 30 | 60 | 30 | O6 | 15 | 60 | 15 | 45 | 60 | 0.05 | 12 |

As shown in Table 1, the carbon concentration [C] in each of the samples of Levels 1 to 12 before tapping was about 0.05 mass%. Meanwhile, the nitrogen concentration [N] widely varied from 12 mass ppm to 136 mass ppm. Regarding the sample of the level where the oxygen-gas blowing direction includes one or both of O1 and O4, the nitrogen concentration is lower as the oxygen blowing time in that direction is shorter. It was found that the nitrogen concentration [N] can be stably reduced to 20 mass ppm or less with respect to the sample of the level where the oxygen gas blowing direction includes neither O1 nor O4.

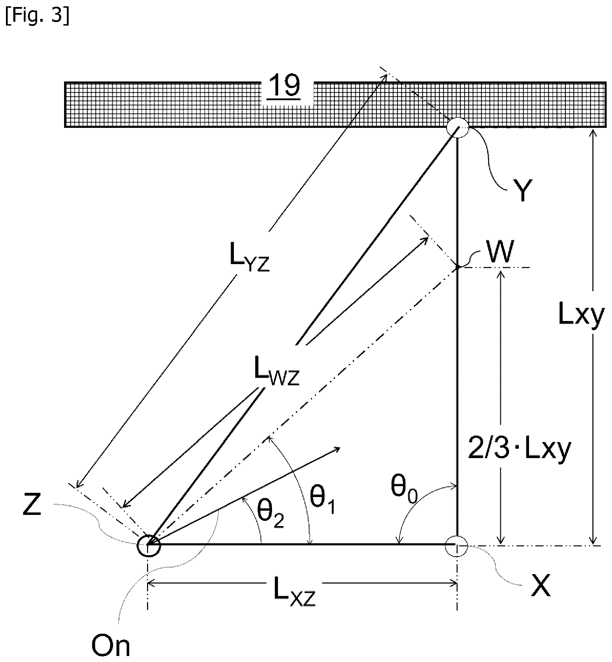

The result shows that it is not always necessary to inject oxygen and carbon into the same zone as in Patent Literature 3. As shown in Fig. 3, provided that the distal end of the discharge port of the carbon-source blowpipe is indicated by a point X, the point of intersection between the inner wall of the furnace and a line obtained by extending the central axis of the carbon-source blowing direction in a plan view seen from above is indicated by a point Y, a position on a side XY that is away from the point X by a distance 2/3 the length of the side XY is indicated by a point W, the distal end of the discharge port of the oxygen-blowing lance is indicated by a point Z, and the angle $\angle$ XZW of a triangle $\triangle$XWZ is indicated by an angle $\theta_1$(°), it is found that if the oxygen-containing-gas blowing direction $\theta_2$(°), which is open toward the Y side with respect to a side ZX passing through the distal end (point Z) of the discharge port of the oxygen-blowing lance in the plan view seen from above, is a positive value and is $\theta_1$ or less, a high denitrification effect can be obtained with the simultaneous blowing of carbon and oxygen. This is because if the angle $\theta_2$ indicating the oxygen blowing direction is 0 or a negative value, it is concerned that the major portion of the oxygen jet will flow toward the furnace wall, which may cause wear damage to the furnace wall 19. In addition, when a plurality of carbon-source blowpipes are provided, the above condition is preferably satisfied in relation to at least one of the carbon-source blowpipes. It should be noted that the linear velocity of both the oxygen gas and the carbon source blown in decreases at a position away from the discharge port. Thus, it is preferable to set the point W at a position closer to the point X with respect to the position that is away from the point X by a distance 2/3 the length of the side XY, and specifically set the point W at the middle point of the side XY.

The angle $\theta_1$(°) may be determined from the facility drawing or may be calculated with reference to Expressions 1 to 3 below, for example, based on the law of cosines for triangles, using the respective lengths $L_{XY}$ (m), $L_{YZ}$ (m), and $L_{XZ}$ (m) of the sides XY, YZ, and XZ.

[Expression 1]

$$\cos\left(\frac{\pi}{180}\theta_0\right) = \frac{L_{XY}{}^2 + L_{XZ}{}^2 - L_{YZ}{}^2}{2L_{XY}L_{XZ}} = \frac{4L_{XY}{}^2/9 + L_{XZ}{}^2 - L_{WZ}{}^2}{L_{XY}L_{XZ}}$$

[Expression 2]

$$L_{WZ} = \sqrt{L_{XZ}{}^2/2 + L_{YZ}{}^2/2 - L_{XY}{}^2/18}$$

[Expression 3]

$$\theta_1 = \cos^{-1}\left(\frac{L_{XZ}{}^2 + L_{WZ}{}^2 - L_{XY}{}^2/4}{2L_{XZ}L_{WZ}}\right) \times \frac{180}{\pi}$$

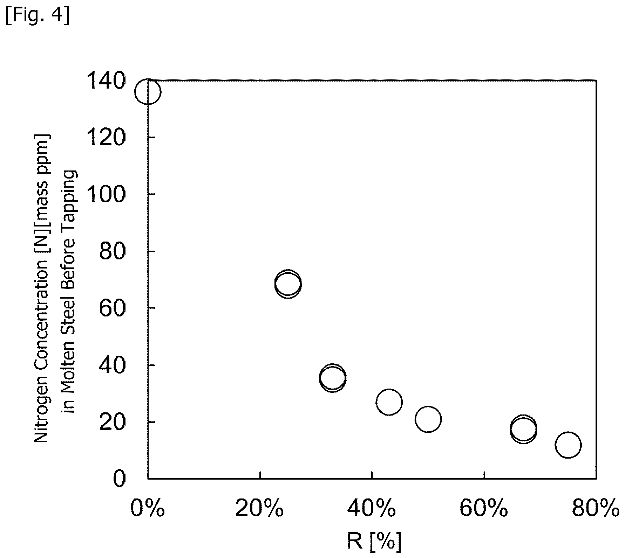

Next, the results of the experiment shown in Table 1 were organized based on the effective time for the simultaneous supply of carbon and oxygen. The time taken from the start of melting scrap to the start tapping of molten steel from the furnace is assumed as $t_2$ (min). The time during which carbon and oxygen are simultaneously supplied from the carbon-source supply port and the oxygen-containing gas supply port, respectively, while the above condition of the direction of oxygen blown in from the oxygen-blowing lance is satisfied with respect to at least one carbon-source blowpipe, is represented as $t_1$ (min). The effective ratio of the time for simultaneously supplying carbon and oxygen was organized based on R = $t_1/t_2$ × 100(%). Then, it was found that as shown in Fig. 4, the nitrogen concentration [N] analyzed for the sample before tapping is lower as the ratio R of the simultaneous supply time is higher.

Typically, low-nitrogen steel refers to steel with a nitrogen concentration of 40 ppm or less in a product. Thus, the range of the nitrogen concentration [N] that is 40 mass ppm or less in molten steel is assumed as a low nitrogen concentration range. First, it is necessary to satisfy, with respect to at least one carbon-source blowpipe, a condition that the angle $\theta_2$(°), which is the angle of the oxygen blowing direction from the oxygen-blowing lance from the side XZ to the Y direction, is a positive value and is $\theta_1$ or less. Further, to achieve the low nitrogen concentration range, it is preferable to set the effective ratio R of the time for the simultaneous supply of carbon and oxygen that satisfies the above condition with respect to the operation time, to 30% or more. In addition, ultra-low nitrogen steel refers to steel with a nitrogen concentration of 25 ppm or less in a product. Thus, the range of the nitrogen concentration [N] that is 25 ppm or less in molten steel is defined as an ultra-low nitrogen concentration range. Herein, to achieve the ultra-low nitrogen concentration range, it is preferable to set the effective ratio R of the time for the simultaneous supply of carbon and oxygen, which can satisfy the above condition with respect to the operation time, to 45% or more.

The present invention has been proposed based on the above studies. With the present invention, it is possible to stably reduce the nitrogen concentration in molten steel within a melting furnace or a refining furnace to a low nitrogen concentration range without the need for an enormous investment.

Example

Punched scrap (with a nitrogen content of approximately 22 mass ppm) was charged as the scrap 2 into an alternating-current electric arc furnace, in which approximately 60 to 70 tons of molten steel 5 having a carbon concentration of 0.03 to 0.06 mass% remained, at a weight of 10 to 15 tons at a time with the pusher 3. At the same time, the scrap 2 was melted using an arc from the graphite electrodes 4. Then, 1.8 tons of coke were added to the obtained molten steel 5 from above and powdered carbon was blown into the furnace together with an air carrier at a rate of 10 to 20 kg/min from the carbon-source blowpipe 13a on the slag removal side and at a rate of 20 to 30 kg/min from the carbon-source blowpipe 13b on the tapping side, so that the molten steel 5 was carburized. An oxygen gas was blown onto the molten steel at a rate of 60 to 70 $Nm^3$/min from the oxygen-blowing lance 10 on the slag removal side. Then, immediately after the blowing of oxygen from the oxygen-blowing lance 10 on the slag removal side was stopped, an oxygen gas was blown into the molten steel at a rate of 40 to 50 $Nm^3$/min from the oxygen-blowing lance 15 on the tapping side to carry out decarburization. The time $t_2$ (min) from the start of scrap melting due to the start of current flow to the start of tapping the molten steel from the furnace was in the range of 50 to 60 minutes, and the carbon concentration [C] in the molten steel tapped from the electric furnace was in the range of 0.03 to 0.06 mass%. With respect to the relationship between the oxygen-blowing lance 10 on the slag removal side and the carbon-source blowpipe 13a on the slag removal side and the relationship between the oxygen-blowing lance 10 on the slag removal side and the carbon-source blowpipe 13b on the tapping side, the respective angles $\theta_1$ were found to be 95° and 105°. With respect to the relationship between the oxygen-blowing lance 15 on the tapping side and the carbon-source blowpipe 13a on the slag removal side and the relationship between the oxygen-blowing lance 15 on the tapping side and the carbon-source blowpipe 13b on the tapping side, the respective angles $\theta_1$ were found to be 40° and 85°. The denitrification behavior was confirmed by adjusting as appropriate the oxygen blowing direction $\theta_2$ as well as the effective ratio R of the time for simultaneously supplying carbon and oxygen. The temperature of the obtained molten steel was found to be 1590 to 1600°C, the amount of melt was found to be 210 to 220 tons per process, and the volume of slag was found to be 100 to 150 kg/ton of molten steel. Table 2 shows the operating conditions and results.

[Table 2]

| Test No. | Oxygen Blowing Conditions on Slag Removal Side | | | | Oxygen Blowing Conditions on Tapping Side | | | | R | Steel Composition at Tapping | | Remarks |
| | Carbon Source on Slag Removal Side | | Carbon Source on Tapping Side | | Carbon Source on Slag Removal Side | | Carbon Source on Tapping Side | | | | | |
| | $\theta_1$ | $\theta_2$ | $\theta_1$ | $\theta_2$ | $\theta_1$ | $\theta_2$ | $\theta_1$ | $\theta_2$ | | [C] | [N] | |
| | ° | ° | ° | ° | ° | ° | ° | ° | % | mass% | mass ppm | |
| 1 | 95 | 170 | 105 | 110 | 40 | -10 | 85 | 10 | 25 | 0.05 | 51 | Invention Example |
| 2 | 95 | 170 | 105 | 110 | 40 | 25 | 85 | 45 | 28 | 0.04 | 44 | Invention Example |
| 3 | 95 | 170 | 105 | 110 | 40 | 20 | 85 | 40 | 35 | 0.06 | 33 | Invention Example |

(continued)

| Test No. | Oxygen Blowing Conditions on Slag Removal Side | | | | Oxygen Blowing Conditions on Tapping Side | | | | R | Steel Composition at Tapping | | Remarks |
|---|---|---|---|---|---|---|---|---|---|---|---|---|
| | Carbon Source on Slag Removal Side | | Carbon Source on Tapping Side | | Carbon Source on Slag Removal Side | | Carbon Source on Tapping Side | | | | | |
| | $\theta_1$ | $\theta_2$ | $\theta_1$ | $\theta_2$ | $\theta_1$ | $\theta_2$ | $\theta_1$ | $\theta_2$ | | [C] | [N] | |
| | ° | ° | ° | ° | ° | ° | ° | ° | % | mass% | mass ppm | |
| 4 | 95 | 60 | 105 | 0 | 40 | 20 | 85 | 40 | 58 | 0.05 | 20 | Invention Example |
| 5 | 95 | 60 | 105 | 0 | 40 | 20 | 85 | 40 | 75 | 0.04 | 12 | Invention Example |
| 6 | 95 | 170 | 105 | 110 | 40 | 75 | 85 | 95 | 0 | 0.03 | 120 | Comparative Example |

Each of Test Nos. 1 to 5 in which the angle $\theta_2$ of the oxygen blowing direction on the slag removal side or the tapping side satisfies the condition that the angle $\theta_2$ has a positive value and is $\theta_1$ or less with respect to any one of the carbon-source supply ports, corresponds to an invention example. Test No. 6 in which each of the angles $\theta_2$ of the oxygen blowing directions on the slag removal side and the tapping side with respect to the carbon-source supply ports on the slag removal side and the tapping side is 0 or has a negative value or is more than the angle $\theta_1$, corresponds to a comparative example. With respect to the example of the invention, the nitrogen concentration [N] in the molten steel at tapping is 1/2 that of the comparative example or less.

In Test No. 3 in which the effective ratio R of the time for simultaneously supplying carbon and oxygen is set to 30% or more, the nitrogen concentration [N] in the molten steel at tapping is about 1/4 that of the comparative example, which is in the low nitrogen concentration range ($\leq$ 40 mass ppm). In each of Test Nos. 4 and 5 in which the effective ratio R of the time for simultaneously supplying carbon and oxygen is set to 45% or more, the nitrogen concentration [N] in the molten steel at tapping is in the ultra-low nitrogen concentration range ($\leq$ 25 mass ppm).

The unit used in this specification is converted as follows.

The unit of mass: 1 ton = 1000 kg.

Symbol "N" added to the unit of the volume of a gas represents the volume in the standard state, that is, at a temperature of 0°C and a pressure of 101325 Pa.

Industrial Applicability

According to the method for denitrifying molten steel of the present invention, it is possible to stably reduce the nitrogen concentration in molten steel within a melting furnace or a refining furnace to a low nitrogen concentration range without the need for an enormous investment. Thus, the present invention is industrially advantageous.

Reference Signs List

1 furnace body
2 scrap
3 pusher
4 graphite electrode
5 molten steel
6 hopper facility above furnace
7 flux
8 slag
9 oxygen pipe system

10 oxygen-blowing lance on slag removal side

11 oxygen-containing gas (i.e., oxygen)

12 pipe system for carbon source and carrier gas

13 carbon-source blowpipe

13a carbon-source blowpipe (on slag removal side)

13b carbon-source blowpipe (on tapping side)

14 carbon source and carrier gas (powdered carbon and air)

15 oxygen-blowing lance on tapping side

16 slag removal port

17 tapping port

18 exhaust gas

19 furnace wall

X, x distal end of discharge port of carbon-source blowpipe

Y, y intersection point between inner wall of furnace and central axis of carbon-source blowing direction in plan view seen from above

Z, z distal end of oxygen discharge port of oxygen-blowing lance

O1 to O6 and On oxygen blowing direction (central axis thereof) in plan view seen from above

**Claims**

1. A method for denitrifying molten steel comprising supplying an oxygen-containing gas and a carbon source carried with a carrier gas to the molten steel charged into a melting furnace or a refining furnace,
   **characterized in that**
   the oxygen-containing gas and the carbon source are simultaneously blown onto the molten steel under a condition that, provided that a triangle $\triangle XYZ$ is defined by connecting, in a plan view seen from above, a distal end (point X) of a discharge port of a carbon-source blowpipe; an intersection point (point Y) between an inner wall of the furnace and a line obtained by extending a central axis of a carbon source blowing direction; and a distal end (point Z) of a discharge port of an oxygen-blowing lance, that a point W is positioned on a side XY that is away from the point X by a distance 2/3 a length of the side XY, and that an angle $\theta_1(°)$ is an angle $\angle XZW$, an angle $\theta_2(°)$ of an oxygen-containing-gas blowing direction that is open toward a Y side with respect to a side ZX passing through the distal end (point Z) of the discharge port of the oxygen-blowing lance in the plan view seen from above is a positive value and is the angle $\theta_1$ or less.

2. The method for denitrifying molten steel according to claim 1, wherein
   when the carbon-source blowpipe includes a plurality of carbon-source blowpipes, the condition is satisfied in relation to at least one of the carbon-source blowpipes.

3. The method for denitrifying molten steel according to claim 1, wherein
   a time $t_1$ (min) for simultaneously supplying the carbon source and the oxygen-containing gas from the carbon-source blowpipe and the oxygen-blowing lance, respectively, is set to at least 30% or more of a time $t_2$ (min) taken from a start of melting a cold iron source to a start of tapping the molten steel from the furnace.

4. The method for denitrifying molten steel according to claim 2, wherein
   a time $t_1$ (min) for simultaneously supplying the carbon source and the oxygen-containing gas from the carbon-source blowpipe and the oxygen-blowing lance, respectively, is set to at least 30% or more of a time $t_2$ (min) taken from a start of melting a cold iron source to a start of tapping the molten steel from the furnace.

5. The method for denitrifying molten steel according to any one of claims 1 to 4, wherein
   the point W is positioned at a middle point of the side XY.

6. The method for denitrifying molten steel according to any one of claims 1 to 4, wherein
   the melting furnace is an electric furnace.

7. The method for denitrifying molten steel according to claim 5, wherein
   the melting furnace is an electric furnace.

[Fig. 1]

[Fig. 2]

[Fig. 3]

[Fig. 4]

## INTERNATIONAL SEARCH REPORT

| International application No. |
| --- |
| **PCT/JP2023/025699** |

**A. CLASSIFICATION OF SUBJECT MATTER**

***C21C 7/00***(2006.01)i

FI: C21C7/00 N

According to International Patent Classification (IPC) or to both national classification and IPC

**B. FIELDS SEARCHED**

Minimum documentation searched (classification system followed by classification symbols)

C21C7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 07-041828 A (NIPPON STEEL CORP.) 10 February 1995 (1995-02-10) paragraphs [0033]-[0047], fig. 4 | 1-7 |
| A | JP 05-156343 A (NIPPON STEEL CORP.) 22 June 1993 (1993-06-22) paragraph [0023], fig. 2 | 1-7 |
| A | JP 2016-108575 A (NIPPON STEEL & SUMITOMO METAL CORP.) 20 June 2016 (2016-06-20) paragraphs [0021]-[0030], fig. 1 | 1-7 |

☐ Further documents are listed in the continuation of Box C.  ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **14 August 2023** | **22 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/025699**

| Patent document<br>cited in search report | | | Publication date<br>(day/month/year) | Patent family member(s) | Publication date<br>(day/month/year) |
|---|---|---|---|---|---|
| JP | 07-041828 | A | 10 February 1995 | (Family: none) | |
| JP | 05-156343 | A | 22 June 1993 | (Family: none) | |
| JP | 2016-108575 | A | 20 June 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11012634 A
- JP H03028312 A

- WO 2002533566 A